# EUROPEAN PATENT SPECIFICATION

(11) **EP 0 805 929 B1**
(45) Date of publication and mention of the grant of the patent: **22.10.2008**
(21) Application number: 96904521.0
(22) Date of filing: 31.01.1996
(51) Int. Cl.: B25J 1/02, F16H 19/00, F21V 21/22, G10D 7/10, G10D 13/02, A47L 9/00, A47H 5/032, F16M 11/32, B63B 15/00, B25G 1/04

(54) **EXTENSIBLE AND RETRACTABLE ELEMENTS AND VARIOUS USES FOR THE ELEMENTS**
AUSFAHRBARE UND ZUSAMMENSCHIEBBARE ELEMENTE UND UNTERSCHIEDLICHE VERWENDUNGEN DER ELEMENTE
ELEMENTS EXTENSIBLES ET RETRACTABLES ET DIVERSES UTILISATIONS DE CES ELEMENTS

(30) Priority: 31.01.1995 IL 11249495; 24.02.1995 IL 11277295; 02.03.1995 IL 11284595
(43) Date of publication of application: 12.11.1997
(73) Proprietor: Hammer, Mordechai, 52167 Ramat Gan (IL)
(72) Inventor: Hammer, Mordechai, 52167 Ramat Gan (IL)
(74) Representative: Berglund, Erik Wilhelm
(86) International application number: PCT/US1996/001209
(87) International publication number: WO 1996/024000

(56) References cited:
- DE-A- 3 630 346
- DE-C- 258 819
- GB-A- 678 827
- US-A- 198 465
- US-A- 326 336
- US-A- 399 313
- US-A- 1 277 285
- US-A- 1 325 053
- US-A- 1 456 478
- US-A- 2 546 452
- US-A- 2 776 168
- US-A- 2 795 050
- US-A- 3 076 263
- US-A- 4 068 673
- US-A- 4 388 033
- US-A- 4 606 525
- US-A- 4 779 650
- US-A- 5 037 057
- US-A- 5 267 583
- US-A- 5 267 712
- US-A- 5 493 480

## Description

The present invention relates to a wide variety of devices and products and for many uses in different fields, involving principles that were never used before in the field of telescopic structures and their movement. In addition, the present invention relates to devices for multiplying the effective physical work achieved by simple hand and leg movements by a novel motion transmission system.

### BACKGROUND OF THE INVENTION

In many fields, there exist inventions to multiply man's capability. For example, the telephone and microphone multiply the range and power of man's voice, and the computer multiplies man's calculation ability several fold. The car multiplies man's travel ability in reaching his destination, while motors and engines multiply his strength. However, many hand and leg movements are needed to perform simple tasks.

The telescopic structures that exist today are mostly in the field of cranes, and the telescopic cranes are used mostly to lift things from place to place and to reach different heights. The basic telescopic cranes have: 1) a base 2) a motor to activate (in and out) the telescoping parts, 3) a system to hold and move the telescopic system to the desired place, (to the sides and to different heights) and 4) an end of the telescopic crane that has the capability of performing the different jobs.

The present invention uses new principles that relate to the structure and movement of such telescopic systems, which were initially disclosed by the present inventor in PCT application published under WO 94/01254, and US Patents 5,322,334 and 5,324,086.

Today, there are many products which require a person to apply a great deal of effort and time to operate, which sometimes even endanger the operator's health and security. For example, in order to erect and stabilize a camera tripod, as many as fourteen similar, repetitive movements are required. Another example involves the activity in using vacuum cleaner tools, in which the user must engage in many bending movements which damage the back, and present difficulty in reaching high areas which must be cleaned. Still another example involves the use of spray equipment or fire extinguishing equipment in which the user is too close to the chemicals sprayed, and inhales them, which is dangerous.

The existing products do not address the problems of difficult and strenuous body movements, as described above. Thus, it would be desirable to provide products which solve the problems described, and simplify the effort and shorten the time required for operation.

### SUMMARY OF THE INVENTION

Accordingly, it is a principal object of the present invention to overcome the problems of existing products requiring hand movements for their operation, and provide a system of telescopic elements for multiplying the effective physical work achieved by simple hand and leg movements. This multiplying of the effects of hand movement, and control over the telescopic motion of structures and their length, can be implemented in many fields including cleaning systems, vacuum cleaners, measuring rods, tools, paint rollers, wall scrapers, music stands and instruments, parasols, shades, curtains, sailing boats, and structures such as chairs, tripods, tables, tents, etc. Other advantages of the invention are in the field of cargo transportation and delivery from one place to the other.

According to the invention, the system of claim 1 is provided.

Other features and advantages of the invention will become apparent from the following drawings and description.

### BRIEF DESCRIPTION OF THE DRAWINGS

For a better understanding of the invention with regard to the embodiments thereof, reference is made to the accompanying drawings, in which like numerals designate corresponding elements or sections throughout, and in which:
Fig. 1 is a front view of an example of a tool not covered by the claims which is extendible in telescopic fashion from either end;
Figs. 2-6 show activites performed with the Fig. 1 tool;
Figs. 7-9 show telescopically extendible pipes not covered by the claims which use a gearwheel arrangement for motion transmission;
Figs. 10-13 show a telescopically extendible pipe not covered by the claims usable as a vacuum cleaner tool;
Fig. 14 shows the motion transmission system of Figs. 10-13 for attachment to existing vacuum cleaner tools;
Fig. 15a shows a telescopically extendible pipe not covered by the claims with an adjustable extension range;
Fig. 15b shows the motion transmission system of Fig. 15a for attachment to existing vacuum cleaner tool;
Figs. 16 and 17 show automatically extendible pipes in accordance with the invention;
Figs. 19a-c and Fig. 20 show ways of grasping and tools constructed using the pipes of Figs. 16 and 17;

### DETAILED DESCRIPTION OF THE PREFERRED EMBODIMENTS

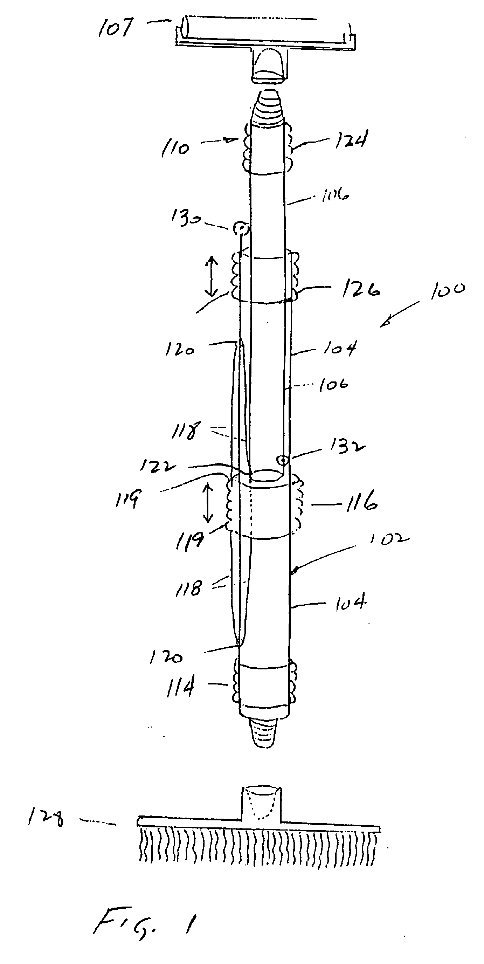

Referring to Fig. 1, there is shown an example of a tool 100 which can be operated from either side. This example is not covered by the claims. In Fig. 1 there is seen a pipe 102 with two segments 104, 106 (or more) on which there can be assembled different tools at either end as needed. In the figure, a roller 101 for painting is assembled on the top end 110. The roller and pipe are operated by holding the fixed handle 114 in one hand, and operating the activation handle 116 (that moves on and along segment 104) with the other hand. This moves segment 106 up and down through motion of straps 118 which are attached at either end to handle 116 at points 119 with the loop sliding through holes 120 formed in segment 104, and being attached to end 122 of segment 106, such that roller 101 turns and moves up and down, to perform the paint job.

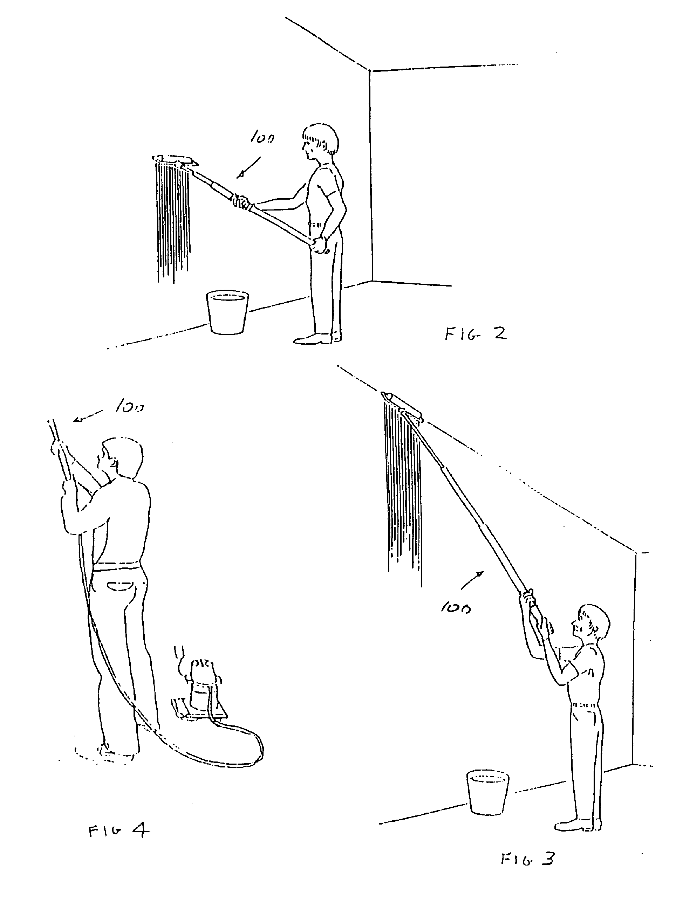

In this activity, the operating hand moves handle 116 in the opposite direction to the motion of segment 106, thus enabling the user to reach greater distances, which is good for working at heights for painting the wall, fruit picking, tree trimming, cleaning high windows etc. (See Figs. 2-4)

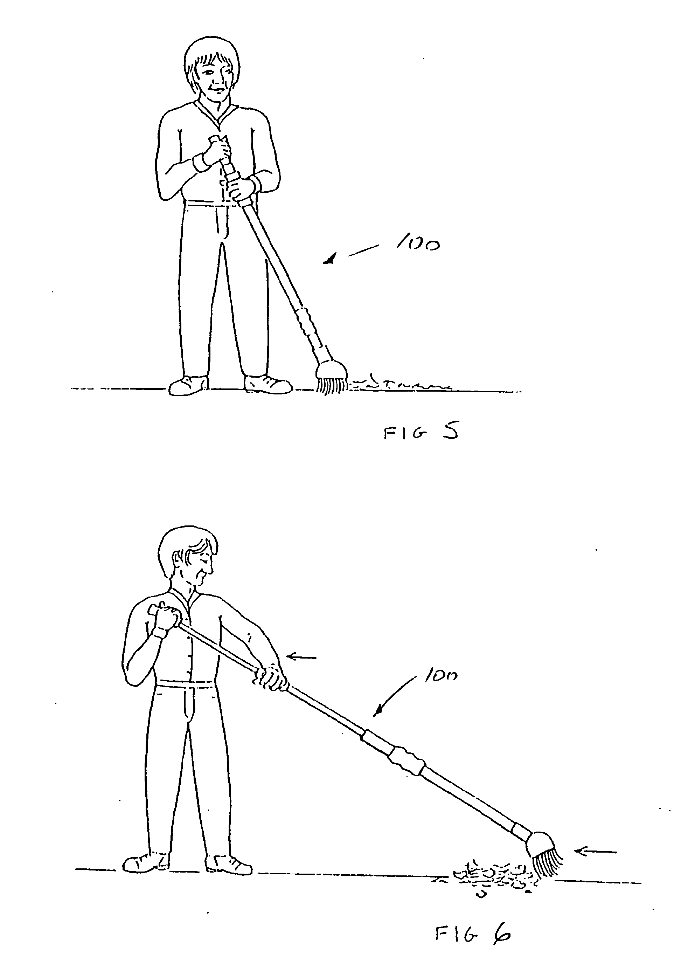

In contrast to the previous description, the device can be operated in the same direction as the hand motion. The pipe can be operated from its other end and then one hand will hold the handle grip 124 at the top end 110 of segment 106, and the other hand will move and operate the activating handle 126 on segment 104, which will move the second segment 104 back and forth on segment 106, as needed. In this activity, the operating hand moves in the same direction as the motion of segment 104, which is effective for working in lower places, and with a broom or sweeper, etc. (See Figs. 5-6)

Also shown in Fig. 1 are pulleys 130, 132, which function to create smooth movement of the segments with minimum friction, and to balance them. The pulleys are one possible solution, but any other technical solution will be possible for eliminating friction and providing balance. The main improvement accomplished by this device is that, unlike with existing devices, which require bending and moving the body and legs while cleaning with a broom, the inventive device enables the user to stand straight, and perform the cleaning activity simply by moving his hand, without the need for bending.

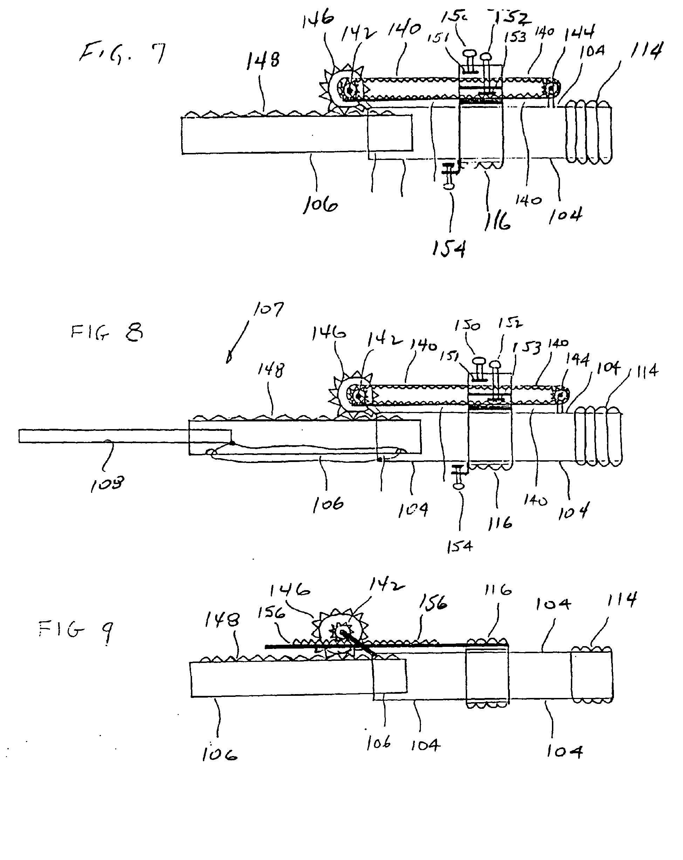

In Fig. 7, there is shown a telescopic system for multiplying manipulation effort and reducing deployment time, which is not covered by the claims. Its purpose is to develop a system in which a short movement drives a joint telescopic system (e.g. an extendible telescopic pipe), to produce a movement longer than the short, driving movement. This can be applied to an extendible telescopic pipe with two segments, which enables a small movement in the first segment to produce a longer movement in the rest of the telescopic pipe segments. This will be effective, for instance, in an extendible telescopic pipe in which each of its segments has a length of 2.0 meters, and with a driving movement of 0.5 meter of the movement handle, the second segment moves simultaneously 2.0 meters. This pipe could be usable for brooms, paint brushes, gardening tools, vacuum cleaners and many other applications.

In Fig. 7, there is shown a pipe with two segments. In the initial position, one hand grasps the fixed handle 114 which is positioned on the edge of segment 104. The other hand holds the activation handle 116 that moves along and on the first segment 104.

The pipe can be opened by pushing the activation handle 116 forward (left in the drawing) to activate and move the toothed loop 140 that will move and rotate the small gearwheels 142,144 clockwise. As a result, the large gearwheel 146 will rotate since it is connected to small gearwheel 142 and both spin on an axle connected to the first segment 104. The rotation of gearwheel 146 will move the toothed rail 148 (positioned along the second segment), and will cause the second segment 106 to emerge out of the first segment 104 (another arrangement is possible instead of the toothed rail 148).

Since gearwheel 146 is larger in diameter than gearwheel 142, a short activation movement of the activation handle 116 forward produces a larger movement that will draw the full length of the second segment 106 out of the first. THREE-SEGMENT PIPE

In Fig. 8 there is shown a pipe 107 of three segments which is not covered by the claims. It is possible to add an additional segment 108 and it will function as an additional telescopic segment which moves with movement of handle 116. It is possible that the whole or part of the movement system will be on segment 104. The movement handle 116 could activate the toothed loop 140 by locking on it anywhere along it on one of its sides, with the assistance of either of bolts 150,152 and keys 151,153. This will enable activation of the telescopic pipe in a movement consistent with the movement of the segments going in and out, or in the opposite direction. Thus, if bolt 152 is locked on strap 140, the movement of the pipe segments 106-108 will be like that of handle 116, which is suitable for low cleaning activities. If bolt 150 is locked onto strap 140 (bolt 150 is released) the movement of handle 116 will be in the opposite direction to that of segment 106, which is suitable for high cleaning activities.

In addition, movement of handle 116 in short strokes, when the user holds the telescopic pipe with both hands spaced far apart, enables the pipe to be held in stable fashion compared to the situation when both hands are close to each other while in motion. Bolt 154 enables locking the pipe at the desired length.

In Fig. 9 which is not in accordance with the invention, a toothed rail 156 which is connected to the activation handle 116 will activate the small gearwheel 142 while handle 116 is moves. Toothed rail 156 replaces loop 140 and all operations are as described with regard to Figs. 7,8 herein. TELESCOPIC VACUUM CLEANER TOOL

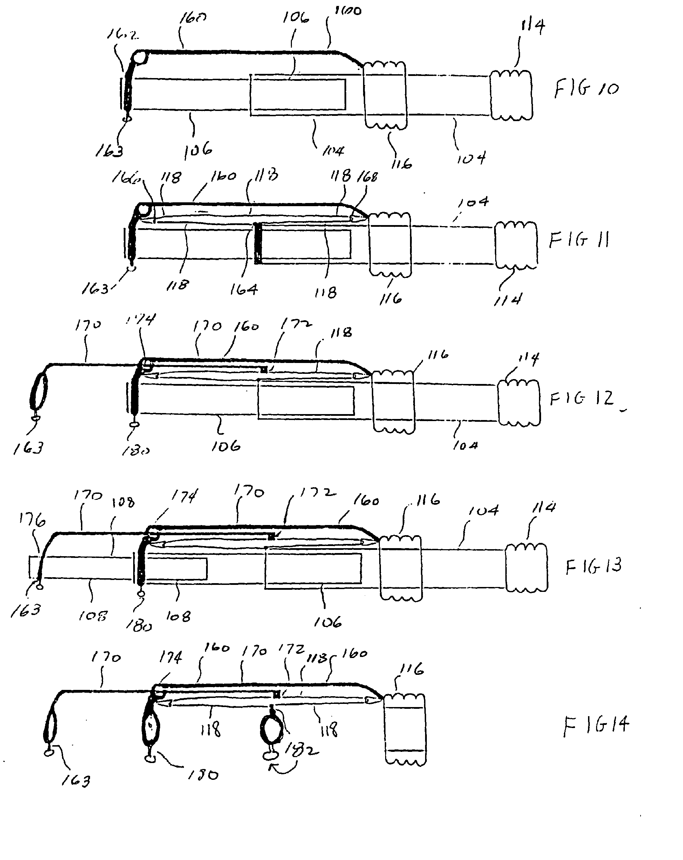

In Fig. 10, there is shown a system not in accordance with the invention for moving segments of a pipe provided as vacuum cleaner tool. The purpose of the invention is to move segments simultaneously, with one movement. In this way, a vacuum cleaner tool can be designed for use comfortably, while reaching different heights with the tool. This design also enables cleaning dust from the floor without bending. Another solution is to create an movement system outside the segments. This development is intended mainly for a vacuum cleaner, but can fit many other applications as well. An explanation of the mode of operation of the tool is presented.

In Fig. 10, segment 106 is shown emerging from segment 104. A fixed handle 114 is positioned on the edge of the first segment 104. The activation handle 116 slides above and along segment. 104. Handle 116 has an arm 160 attached at point 162 to the edge of the second segment 106. The moment activation handle 116 is pushed forward (left in the drawing), segment 106 emerges from segment 104. Pulling the handle back (right in the drawing) causes segment 106 to enter segment 104.

In Fig. 11, a loop or strap 118 is added. Loop 118 is fixedly attached to the edge of segment 104 at point 164. The loop is positioned between and above two pulleys 166,168 which are mounted to the arm at both sides. Moving the activation handle 116 forward moves loop 118 counter-clockwise between the pulleys, as loop 118 is held at point 164.

In Fig. 12, movement of loop 118 causes a second arm 170 (attached to the loop at point 172 and passing through hole 174) to move forward (left in the drawing).

In Fig. 13, a third segment 108 has been added and attached to arm 170 at point 176. Every time the activation handle 116 moves, second arm 170 will move third segment 108 in and out of segment 106. Thus, moving handle 116 moves the second segment 106 in and out of segment 104. This movement causes loop 118 to move and turn counter clockwise. The second arm 170 moves through hole 174 formed in first arm 160. Movement of loop 118 will move arm 170 which is attached thereto at point 172, and this in turn moves third segment 108 in and out of segment 106, by attachment at point 176.

In Fig. 14, there is shown a system of the type shown in the previous Figs. 10-13, which can be manufactured for connection to an existing vacuum cleaner tool to operate it as described. Screws 163, 180 or any other bolting means, can be mounted to arms 160, 170 and will attach to the segments accordingly. The connection point 182 on loop 118 can be connected to the edge of the appropriate segment. The activation handle 116 moves on the same segment. In accordance with the same principle, a telescopic movement system can be assembled of three arms (with two loops) or more.

It is also possible to move three of these systems simultaneously, from a specific center, for opening and closing a tripod with three segmented legs. The system can be activated by a motor, as described in previous applications.

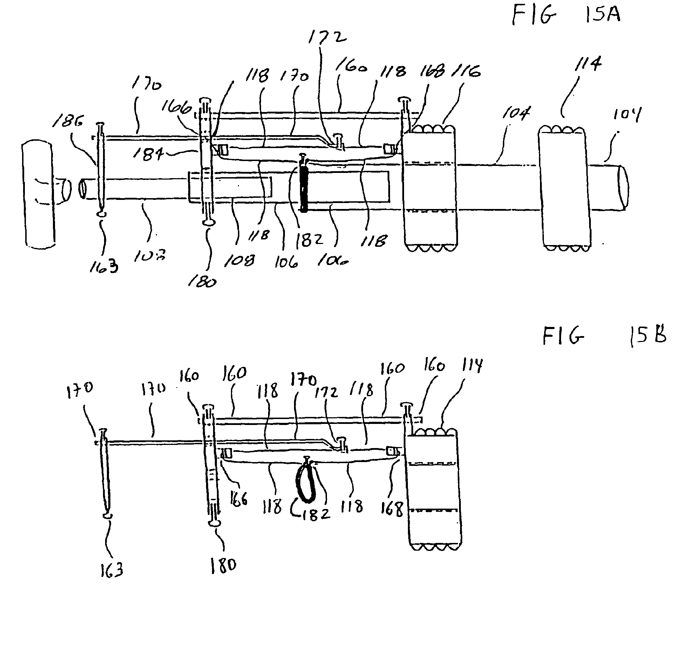

In Fig. 15a-b, a system is shown which is not covered by the claims designed with appropriate clips 184, 186 which are adjustable on respective arms 160, 170 to enable the movement of the pipes' segments in directions previously decided, and within limited ranges. For example, a camera tripod has three segments in each leg. When the invention is assembled on the tripod, each the legs can be opened and closed in one movement. The invention can be assembled on other segments as well. The system can also be designed to provide the moving system without the segments, and can be connected to existing products like legs of a camera stand, etc.

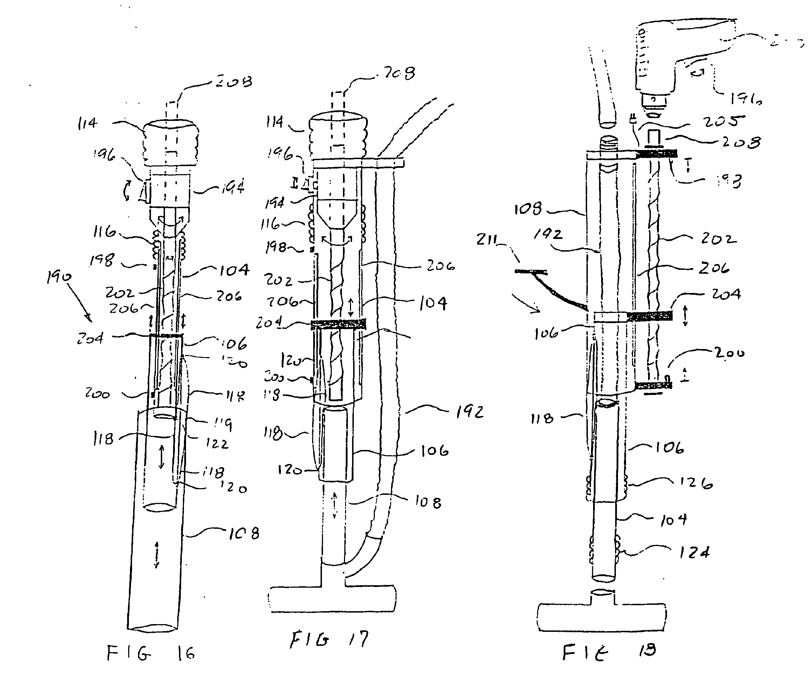

Referring to Figs. 16 and 17, there are shown pipes according to the invention constructed for use as vacuum cleaner tools, and for use with sprinklers and other applications, including electric brooms. The pipes 190 include two or three segments 104,106,108, handles 114,116, loop 118, and an elastic hose 192 for vacuumed materials.

A rechargeable battery-driven motor 194 is provided (such as a drill motor), which is operated and rotates when pressing switch 196 in one direction and changes the direction of rotation, when receiving a pulse from the sensors 198, 200 or activating switch 196. When switch 196 is not depressed, motor 194 will stop. Screw 202 is rotationally driven by motor 194. Motor 194 can be removed and it is possible to activate screw 202 manually by connection at connection point 208.

When nut 204 contacts sensors 198, 200, it sends a signal through an electric wire 205 to motor 194 which then reverses its direction of rotation after receiving the pulse. Sensors 198, 200 can be located anywhere on the first segment, to limit the movements and elongation of the segments. Reversal of direction could also occur by depressing switch 196 in an opposite direction to that depressed previously.

As shown in Fig. 16, screw 202 is in the narrow portion of all segments. The pipe is held at handle 114 with one hand and at handle 116 with the other. Pressing switch 196 will activate motor 194, when switch 196 is depressed, motor 194 rotates clockwise. Motor 194 drives screw 202 in the same direction. Nut 204, threaded on screw 202, will move along it and forward, and because nut 204 is connected to the middle segment 106, its movement will cause segment 106 to move forward on segment 104. Nut 204 moves in a straight line, because it engages a groove or inner track 206, formed in first segment 104. When the middle segment 106 moves away from the first segment 104, loop 118 (or any other movement conveyer) causes third segment 108 to move away from segment 106.

After segments 106, 108 move away from segment 104, at a certain point nut 204 contacts sensor 200. Sensor 200 then transmits a pulse signal through wire 205, to motor 194. This causes motor 194 to reverse its direction of rotation counter-clockwise, and screw 202 rotates in the same direction, to close pipe 190. As a result, nut 204 moves on screw 202, causing second segment 106 to enter onto first segment 104. This also causes segment 108 to enter onto middle segment 106, as it is connected by loop 118.

The pipe 190 can also be closed by depressing switch 196 in the opposite direction to the previous direction, causing motor 194 to rotate in the other direction and closing of the segments onto one another.

In Fig. 17, screw 202 and motor 194 are positioned in the wider portion of the segments and there is an elastic tube 192 connected for use with a vacuum cleaner, or a spray application. The operation is as described with regard to Fig. 16.

In accordance with the principles of the invention, the pipes shown in Fig. 16 and 17 can be applied, with appropriate modifications, to other uses such as a pointer rod for teachers and lecturers, a painting tool, extendible broom or mop handle

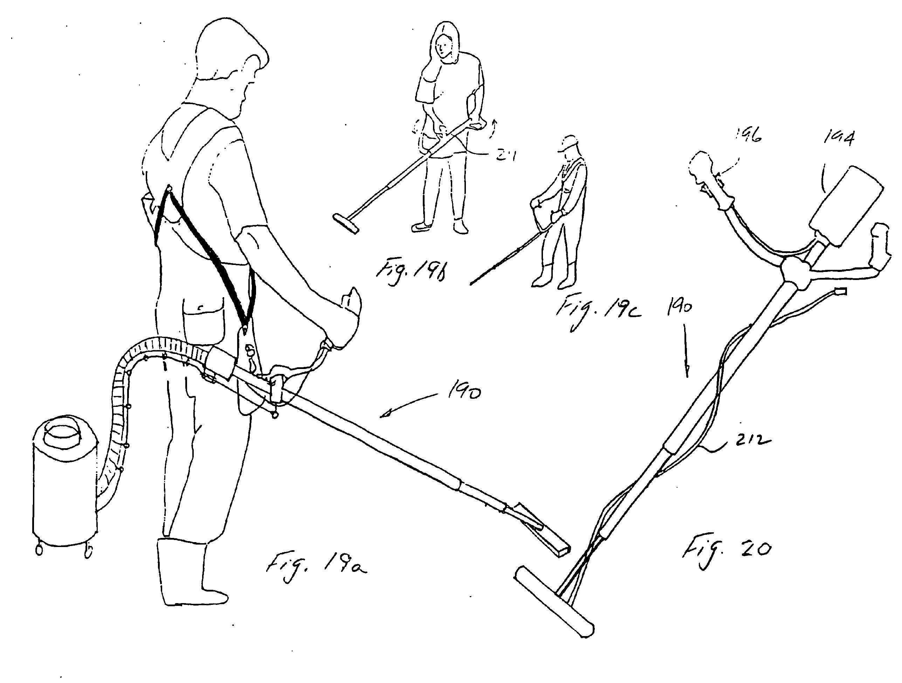

In Figs. 19a-c, 20 there are shown various ways to grasp the pipe described in the previous figures, to enable efficient manipulation of the tool and application of pressure for vacuuming. The user applies pressure to the pipe with his hands, without requiring bending which causes back aches. In this way, while standing erect, the user of the pipe can hold it in a comfortable way, press the activating switch and effectively apply pressure while directing the pipe to the desired places for the vacuum cleaning, or spraying via hose 212.

The motor-operated pipe can be collapsed and elongated automatically, and the operator will not have to move legs or hands nor engage in bending motion to make this kind of movement. Even with a non-motorized pipe, a man can stand erect and work, and move only his hands to collapse/elongate the pipe in operation.

It will be understood that the telescopic system for multiplying movement in accordance with the present invention may be applied to many other embodiments in a large variety of fields, and these are contemplated as being within the scope of the invention, as far as they fall within the set frame of the appended claims.

Having described the invention with regard to certain specific embodiments thereof, it is to be understood that the description is not meant to be a limitation, since further modifications may now suggest themselves to those skilled in the art, and it is intended to cover such modification as fall within the scope of the appended claims.

## Claims

1. A motion transmission and multiplication system (190) comprising:
at least first (104) and second (106) elements extending in the same orientation; and
at least a first means linking said first and second elements and being movable with respect to at least one of them,
said first linking means (118) being arranged on said first element such that when said first linking means is provided with a driving motion in a direction of said orientation, said first and second elements are provided with a driven motion with respect to each other; and **characterized in that** a motorized screw (202) and a third element (108) is nested within said second element (106) and arranged for telescopically-driven motion therein, said motorized screw being arranged such that said driving motion is screw-type on said econd element, to provide said third element with said telescopically-driven motion.

2. The system of claim 1 wherein said driving motion is in the same direction as said driven motion of said second element (106).

3. The system of claim 1 further comprising limit switches mounted at least one of said elements for electrically controlling said screw-type driving motion.

## Patentansprüche

1. Ein Bewegungsübertragungs- und Vervielfachungssystem (190) einschließlich:
mindestens den ersten (104) und zweiten (106) Elementen in der gleichen Richtung ausfahrbar und
mindestens eine Verbindung der besagten ersten und zweiten Elemente, wobei zumindest eines davon beweglich sein muss,
die besagte erste Verbindung (118) soll derart an dem ersten Element angebracht sein, dass diese Verbindung mit einem Fahrantrieb in besagte Ausrichtung beweglich sein soll, die genannten ersten und zweiten Elemente sind mit einem Fahrantrieb ausgestattet, der beide Elemente berücksichtigt und so gebaut ist, dass
eine Antriebsschraube (202) und ein drittes Element (108) mit besagtem zweiten Element (106) verbunden ist und eine teleskopangetriebene Bewegung ermöglicht wird, die Antriebsschraube wird so angebracht, dass der besagte Antrieb an ein zweites Element geschraubt ist, damit dieses dritte Element teleskopangetrieben ist.

2. Das Anforderungssystem 1, wobei die Antriebsbewegung in die gleiche richtung läuft wie die Antriebsbewegung des genannten zweiten Elements (106).

3. Das Anforderungssystem 1 beinhaltet weiterhin Endschalter, die zumindest an einem der besagten Elemente für die elektrische Steuerung besagter geschraubter Antriebe verantwortlich ist.

## Revendications

1. Un système de mouvement de transmission et de reproduction (190) comprenant:
au moins un premier (104) et second (106) élément extensibles dans la même direction; et au moins un premier moyen de transmission dudit premier et second élément étant mobile vis à vis d'au moins un des deux,
ledit premier moyen de transmission (118) soit monté sur le premier élément de telle façon que quand ledit premier moyen de transmission est pourvu d'un mouvement de conduite dans la direction de ladite orientation, ledit premier et second élément sont pourvus d'un mouvement de conduite l'un à l'égard de l'autre, et characterisé par
une vis motorisée (202) et un troisième élément (108) qui est emboîté dans ledit second élément (106) et plannifé pour un mouvement mû télescopiquement par celle ci, ladite vis motorisée arrangée de telle façon que ledit mouvement de conduite est une sorte de vis sur ledit second élément, pour pourvoir ledit troisième élément avec ledit mouvement mû télescopiquement.

2. Le système de la revendication 1 dans lequel ledit mouvement de conduite est dans la même direction que ledit mouvement de conduite dudit deuxième élément (106).

3. Le système de la revendication 1 contenant les interrupteurs montés sur au moins un des éléments controllant électriquement ladite vis pour le mouvement de conduite.
